(19) **Europäisches Patentamt / European Patent Office / Office européen des brevets**

(11) **EP 1 589 351 B1**

(12) **FASCICULE DE BREVET EUROPEEN**

(45) Date de publication et mention
de la délivrance du brevet:
**28.09.2011 Bulletin 2011/39**

(51) Int Cl.:
**G01S 5/14** *(2006.01)*    **G01S 1/18** *(2006.01)*

(21) Numéro de dépôt: **05290677.3**

(22) Date de dépôt: **29.03.2005**

(54) **Procédé et dispositif d'aide à l'atterrissage d'un aéronef sur une piste d'atterrissage**

Verfahren und Vorrichtung zur Landehilfe eines Flugzeuges auf eine Landebahn

Method and apparatus for landing aids of an aircraft on a runway

(84) Etats contractants désignés:
**AT BE BG CH CY CZ DE DK EE ES FI FR GB GR HU IE IS IT LI LT LU MC NL PL PT RO SE SI SK TR**

(30) Priorité: **22.04.2004 FR 0404268**

(43) Date de publication de la demande:
**26.10.2005 Bulletin 2005/43**

(73) Titulaire: **AIRBUS OPERATIONS (SAS)**
**31060 Toulouse (FR)**

(72) Inventeurs:
• **Falcati, Michel**
**32490 Monferran Saves (FR)**
• **Tatham, Gilles**
**31770 Colomiers (FR)**

(74) Mandataire: **Hauer, Bernard**
**Bloch & Bonnétat**
**23bis, rue de Turin**
**75008 Paris (FR)**

(56) Documents cités:
**US-A- 3 662 392    US-A- 5 361 212**
**US-A- 5 820 080    US-B1- 6 239 745**

## Description

La présente invention concerne un procédé et un dispositif d'aide à l'atterrissage d'un aéronef sur une piste d'atterrissage.

Plus précisément, elle concerne un procédé (et un dispositif) employant au moins un moyen radioélectrique d'aide à l'atterrissage et utilisant une position verticale angulaire de l'aéronef. On considère que l'aide à l'atterrissage comprend à la fois l'aide à l'approche, à l'atterrissage proprement dit et au roulage au sol.

Comme moyen radioélectrique d'aide à l'atterrissage, aussi bien pour un atterrissage manuel que pour un atterrissage automatique, on connaît différents systèmes de radionavigation, notamment un système d'atterrissage hyperfréquences de type MLS ("Microwave Landing System" en anglais) ou un système d'atterrissage aux instruments de type ILS ("Instrument Landing System" en anglais). Les besoins opérationnels rendent nécessaire de disposer d'un système de type MLS ou de type ILS qui permet d'effectuer des atterrissages quelles que soient les conditions climatiques et de respecter les exigences imposées par les normes internationales.

On sait que les contraintes principales qui sont liées aux types d'approche et aux contraintes d'installation des antennes sur un aéronef sont les contraintes suivantes :

- une règle dite des 19 pieds (ou 5,8 mètres) en phase finale de l'approche (représentant l'écart vertical entre la trajectoire passant par l'antenne de réception et la trajectoire passant par le dessous du train principal) qui est une exigence imposée par les normes internationales ;
- la forme des diagrammes de rayonnement des antennes et le masquage potentiel des antennes pouvant être lié à des obstacles fixes ou mobiles comme les trains d'atterrissage, mais également aux attitudes de l'aéronef pendant toute la phase d'approche ; et
- l'écart entre le cap de l'aéronef et le cap de la piste d'atterrissage, qui est important en début d'approche.

Pour répondre à toutes les contraintes précitées lors d'un atterrissage, il est nécessaire tout d'abord d'installer une antenne en partie supérieure de l'aéronef, afin de garantir la réception d'un signal radioélectrique lors d'une approche avec des angles importants de capture de l'axe de la piste d'atterrissage (ce signal est utilisé pour calculer la position de l'avion par rapport à l'axe d'approche). De plus, pour respecter la règle des 19 pieds, il faut utiliser une antenne installée en partie inférieure de l'aéronef afin d'avoir un écart vertical, entre la trajectoire passant par cette antenne et celle passant par le point le plus bas du train d'atterrissage principal, qui est inférieur à 19 pieds (ou 5,8 mètres environ).

Pour respecter les deux contraintes précédentes, l'installation devient complexe voire impossible pour des aéronefs, dont le diamètre et la longueur du fuselage sont importants.

En plus des contraintes précitées liées à l'installation des antennes sur l'aéronef, il existe également des contraintes liées aux récepteurs de radionavigation. Une première contrainte est qu'un système de type "MLS" par exemple travaille en valeurs angulaires et une deuxième contrainte est que pour pouvoir corriger, à partir d'une valeur métrique fixe et constante, la position verticale de l'aéronef, le récepteur doit impérativement connaître la position de l'aéronef par rapport au seuil de la piste d'atterrissage, afin de transformer une correction métrique en correction angulaire.

Par ailleurs, on connaît :

- par le document US-5 361 212, un système d'aide à l'atterrissage d'un aéronef comprenant un dispositif GPS différentiel ;
- par le document US-5 820 080, un système d'atterrissage pour aéronef, qui est équivalent à un système d'atterrissage de précision et qui peut être appliqué partout ;
- par le document US-3 662 392, un système à antenne pour aéronef, destiné à être utilisé lors d'un atterrissage aux instruments ;
- par le document US-6 239 745, un système d'atterrissage de précision utilisant un système de navigation par satellites ; et
- par le document US-6 711 479, un dispositif d'aide à l'atterrissage d'un aéronef sur une piste d'atterrissage. Ce dispositif comporte un moyen radioélectrique d'aide à l'atterrissage et utilise une position verticale angulaire de l'aéronef. Il comporte, de plus, des moyens pour déterminer de façon autonome la position de l'aéronef en latitude et longitude, des moyens pour déterminer la position du seuil de la piste d'atterrissage en latitude et longitude et une unité de calcul pour, à partir des positions de l'aéronef et du seuil de la piste d'atterrissage, corriger la position verticale angulaire de l'aéronef, la position verticale angulaire ainsi corrigée étant utilisée pour aider à l'atterrissage de l'aéronef.

La présente invention concerne un procédé d'aide à l'atterrissage d'un aéronef sur une piste d'atterrissage, permettant de remédier aux inconvénients précités.

A cet effet, selon l'invention, ledit procédé du type employant au moins un moyen radioélectrique d'aide à l'atterrissage et utilisant une position verticale angulaire de l'aéronef, procédé selon lequel :

  a) on détermine de façon autonome la position de l'aéronef en latitude et longitude ; et
  b) on fournit la position du seuil de ladite piste d'atterrissage en latitude et longitude,
  est remarquable en ce que de plus :

c) à partir des positions de l'aéronef et du seuil de la piste d'atterrissage, on calcule une première distance correspondant à la distance dans un plan horizontal entre l'aéronef et le seuil de la piste d'atterrissage ;

d) on ajoute à cette première distance la distance dans un plan horizontal entre un point de référence au sol prédéterminé et ledit seuil de la piste d'atterrissage de manière à former une seconde distance ;

e) à l'aide de cette seconde distance et de la valeur de la pente d'approche mesurée de l'aéronef, on calcule une première hauteur correspondant à la hauteur relative de l'aéronef par rapport au seuil de la piste d'atterrissage ;

f) on soustrait à ladite première hauteur un écart métrique prédéterminé de manière à former une seconde hauteur ; et

g) à partir de ladite seconde hauteur et de ladite seconde distance, on corrige ladite position verticale angulaire de l'aéronef, la position verticale angulaire ainsi corrigée étant utilisée pour aider à l'atterrissage de l'aéronef,

lesdites étapes a) à g) étant réalisées de façon automatique et répétitive.

Selon l'invention, ledit écart métrique prédéterminé utilisé à l'étape f) permet de respecter la règle précitée des 19 pieds.

Ainsi, grâce à l'invention, on obtient les avantages suivants :

- une seule antenne permet de répondre à toutes les contraintes précitées, si son installation permet de garantir une réception correcte et suffisante du signal radioélectrique d'aide au guidage tout au long de l'atterrissage ;
- sur des avions très gros porteurs, la présente invention permet de satisfaire facilement à la "règle des 19 pieds" ;
- la présente invention peut être adaptée automatiquement à tous les aéronefs, sans modification ou avec des modifications mineures du moyen radioélectrique d'aide à l'atterrissage ;
- les problèmes d'installation des antennes, en partie inférieure de l'aéronef, sont supprimés ; et
- il n'est plus nécessaire de développer et de mettre au point des algorithmes de commutation entre les différentes antennes.

De façon avantageuse :

- à l'étape a), on détermine la position de l'aéronef à l'aide d'un récepteur GPS embarqué sur ledit aéronef, c'est-à-dire un récepteur d'un système de positionnement par satellites de type GPS ("Global Positioning System" en anglais) ; et/ou
- ledit point de référence au sol utilisé à l'étape d) correspond au point d'origine, sur la piste, de la pente d'approche.

Dans un mode de réalisation préféré, à l'étape e), on calcule ladite première hauteur H1 à l'aide de l'expression suivante :

$$H1 = D1.\tan\alpha$$

dans laquelle :

- $\alpha$ est la valeur de la pente d'approche mesurée par le récepteur du système d'atterrissage ;
- $\tan\alpha$ est la tangente de $\alpha$ ; et
- D1 représente ladite seconde distance.

En outre, avantageusement, à l'étape g), on calcule ladite position angulaire corrigée à l'aide de l'expression :

$$\alpha1 = \arctan\left[(H1 - H2)/D1\right]$$

dans laquelle H1 et D1 représentent les grandeurs spécifiées ci-dessus et, H2 représente ledit écart métrique prédéterminé.

Par ailleurs :

- dans un premier mode de réalisation, ledit moyen radioélectrique d'aide à l'atterrissage comprend un récepteur d'un système d'atterrissage hyperfréquences, de préférence de type MLS ("Microwave Landing System" en anglais), et ledit récepteur reçoit la position du seuil de la piste d'atterrissage à partir d'une station au sol (étape b) ;
- dans un deuxième mode de réalisation, ledit moyen radioélectrique d'aide à l'atterrissage comprend un récepteur d'un système d'atterrissage hyperfréquences, de préférence de type MLS ("Microwave Landing System" en anglais), et ladite position du seuil de la piste d'atterrissage est issue d'une base de données embarquée sur l'aéronef ; et
- dans un troisième mode de réalisation, ledit moyen radioélectrique d'aide à l'atterrissage comprend un récepteur d'un système d'atterrissage aux instruments, de préférence de type ILS ("Instrument Landing System" en anglais), et ladite position du seuil de la piste d'atterrissage est issue d'une base de données embarquée sur l'aéronef.

La présente invention concerne également un dispositif d'aide à l'atterrissage d'un aéronef sur une piste d'atterrissage

Selon l'invention, ledit dispositif du type utilisant une position verticale angulaire de l'aéronef et comportant :

- au moins un moyen radioélectrique d'aide à l'atterrissage ;
- des premiers moyens pour déterminer de façon autonome la position de l'aéronef en latitude et longitude ;
- des deuxièmes moyens pour fournir la position du seuil de ladite piste d'atterrissage en latitude et longitude ; et
- une unité de calcul qui utilise lesdites positions de l'aéronef et du seuil de la piste d'atterrissage,

est remarquable en ce que lesdits premiers moyens, lesdits deuxièmes moyens et ladite unité de calcul sont formés de manière à réaliser leurs traitements de façon automatique et répétitive, et en ce que ladite unité de calcul comprend des moyens :

- pour calculer, à partir des positions de l'aéronef et du seuil de la piste d'atterrissage, une première distance correspondant à la distance dans un plan horizontal entre l'aéronef et le seuil de la piste d'atterrissage ;
- pour ajouter à cette première distance la distance dans un plan horizontal entre un point de référence au sol prédéterminé et ledit seuil de la piste d'atterrissage de manière à former une seconde distance ;
- pour calculer, à l'aide de cette seconde distance et de la valeur de la pente d'approche mesurée de l'aéronef, une première hauteur correspondant à la hauteur relative de l'aéronef par rapport au seuil de la piste d'atterrissage ;
- pour soustraire à ladite première hauteur un écart métrique prédéterminé de manière à former une seconde hauteur ; et
- pour corriger, à partir de ladite seconde hauteur et de ladite seconde distance, ladite position verticale angulaire de l'aéronef, la position verticale angulaire ainsi corrigée étant utilisée pour aider à l'atterrissage de l'aéronef.

Dans un mode de réalisation particulier, lesdits premiers moyens comportent un récepteur GPS embarqué sur l'aéronef, c'est-à-dire un récepteur d'un système de positionnement par satellites de type GPS ("Global Positioning System" en anglais).

En outre :

- dans une première variante, lesdits deuxièmes moyens comportent un récepteur embarqué sur l'aéronef et coopérant avec une station au sol ; et
- dans une seconde variante, lesdits deuxièmes moyens comportent une base de données.

Par ailleurs :

- dans un premier mode de réalisation, ledit moyen radioélectrique d'aide à l'atterrissage comprend un récepteur d'un système d'atterrissage hyperfréquences, de préférence de type MLS ; et
- dans un second mode de réalisation, ledit moyen radioélectrique d'aide à l'atterrissage comprend un récepteur d'un système d'atterrissage aux instruments, de préférence de type ILS.

Par ailleurs, dans un mode de réalisation particulier, le dispositif conforme à l'invention comporte un récepteur multimode d'aide à l'atterrissage qui comprend au moins :

- ledit moyen radioélectrique d'aide à l'atterrissage ;
- lesdits premiers moyens ; et
- ladite unité de calcul.

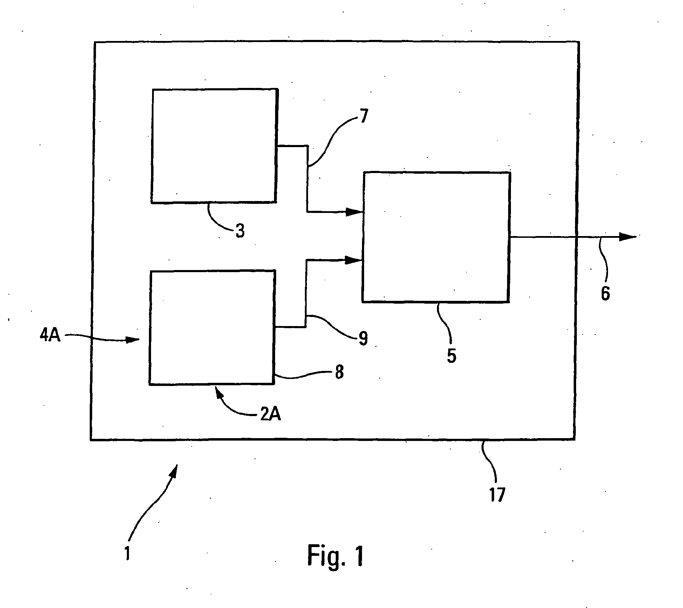

Les figures du dessin annexé feront bien comprendre comment l'invention peut être réalisée. Sur ces figures, des références identiques désignent des éléments semblables. Les figures 1 à 3 sont les schémas synoptiques de trois modes de réalisation différents d'un dispositif conforme à l'invention.

Le dispositif 1 conforme à l'invention est un dispositif d'aide à l'atterrissage d'un aéronef sur une piste d'atterrissage.

Ledit dispositif 1 est du type comportant au moins un moyen radioélectrique 2A, 2B d'aide à l'atterrissage, usuel, et utilisant une position verticale angulaire de l'aéronef.

En outre, selon l'invention, ledit dispositif 1 comporte de plus :

- des premiers moyens 3 pour déterminer de façon autonome la position de l'aéronef en latitude et longitude ;
- des deuxièmes moyens 4A, 4B, 4C pour déterminer la position du seuil de ladite piste d'atterrissage en latitude et longitude ; et
- une unité de calcul 5 pour, à partir desdites positions de l'aéronef et du seuil de la piste d'atterrissage, corriger ladite position verticale angulaire de l'aéronef, la position verticale angulaire ainsi corrigée étant transmise par une liaison 6 et utilisée pour aider à l'atterrissage de l'aéronef.

Pour ce faire, selon l'invention, ladite unité de calcul 5 réalise les opérations suivantes :

- à partir des positions précitées de l'aéronef et du seuil de la piste d'atterrissage, elle calcule une première distance correspondant à la distance dans un plan horizontal entre l'aéronef et le seuil de la piste d'atterrissage ;
- elle ajoute à cette première distance la distance dans un plan horizontal entre un point de référence au sol prédéterminé et ledit seuil de la piste d'atterrissage de manière à former une seconde distance. Selon l'invention, ledit point de référence au sol correspond au point d'origine, sur la piste, de la pente d'approche ;
- à l'aide de cette seconde distance et de la valeur de la pente d'approche mesurée de l'aéronef, elle calcule une première hauteur correspondant à la hauteur relative de l'aéronef par rapport au seuil de la piste d'atterrissage ;

- elle soustrait à ladite première hauteur un écart métrique prédéterminé permettant de respecter la règle des 19 pieds de manière à former une seconde hauteur ; et

- à partir de ladite seconde hauteur et de ladite seconde distance, elle corrige ladite position verticale angulaire de l'aéronef, la position verticale angulaire ainsi corrigée étant donc utilisée pour aider à l'atterrissage de l'aéronef.

Dans un mode de réalisation préféré, ladite unité de calcul 5 calcule :

- ladite première hauteur H1 à l'aide de l'expression suivante :

$$H1 = D1.\tan\alpha$$

dans laquelle :

- $\alpha$ est la valeur de la pente d'approche mesurée par le récepteur du système d'atterrissage ;
- $\tan\alpha$ est la tangente de $\alpha$ ; et
- D1 représente ladite seconde distance ; et

- ladite position angulaire corrigée à l'aide de l'expression :

$$\alpha 1 = \arctan [(H1 - H2)/D1]$$

dans laquelle H1 et D1 représentent les grandeurs spécifiées ci-dessus et, H2 représente ledit écart métrique prédéterminé.

Dans un mode de réalisation particulier, lesdits premiers moyens 3 qui sont reliés par une liaison 7 à l'unité de calcul 5, comportent un récepteur GPS usuel embarqué sur l'aéronef, c'est-à-dire un récepteur d'un système de positionnement par satellites de type GPS ("Global Positioning System" en anglais).

Par ailleurs :

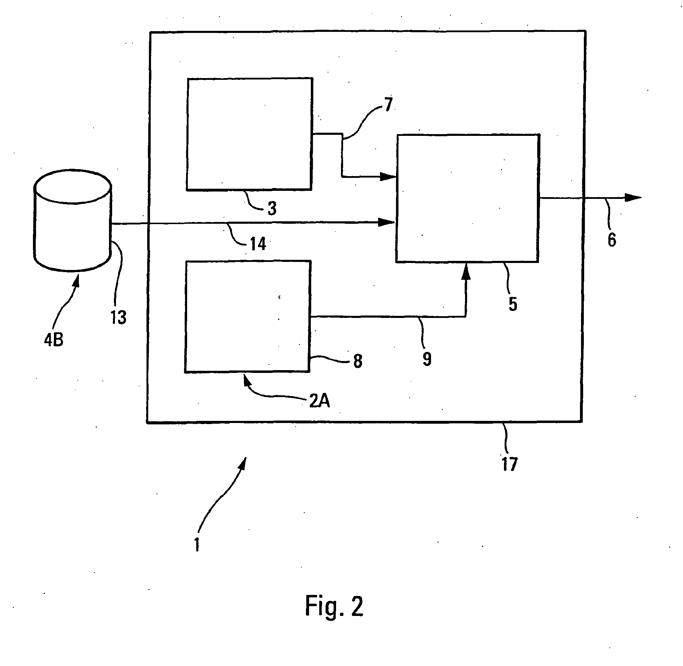

- dans une première variante représentée sur les figures 1 et 2, ledit moyen radioélectrique 2A d'aide à l'atterrissage comprend un récepteur 8 d'un système d'atterrissage hyperfréquences, de préférence de type MLS, qui est relié par une liaison 9 à l'unité de calcul 5. Un système d'atterrissage hyperfréquences (ou à micro-ondes) est un système d'atterrissage qui opère dans le spectre des micro-ondes et qui fournit un guidage latéral et vertical aux aéronefs équipés d'instruments compatibles ; et

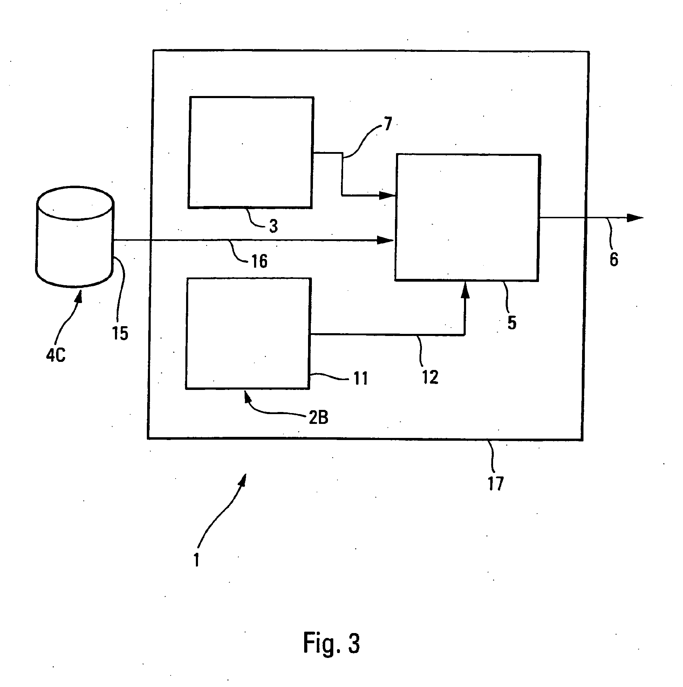

- dans une seconde variante représentée sur la figure 3, ledit moyen radioélectrique 2B d'aide à l'atterrissage comprend un récepteur 11 d'un système d'atterrissage aux instruments, de préférence de type ILS, qui est relié par une liaison 12 à l'unité de calcul 5. Un système d'atterrissage aux instruments est un système de radionavigation qui est composé de balises automatiques situées en bordure de piste et d'un récepteur radio spécialisé à bord de l'aéronef, qui fournit un guidage horizontal et vertical avant et pendant l'atterrissage en présentant au pilote l'écart latéral par rapport à l'axe de la piste et l'écart vertical par rapport à un plan de descente.

Par ailleurs, dans un premier mode de réalisation représenté sur la figure 1, lesdits deuxièmes moyens 4A comportent ledit récepteur 8 qui reçoit la position du seuil de la piste d'atterrissage, de façon usuelle, à partir d'une station (non représentée) qui est située au sol.

Dans un deuxième mode de réalisation représenté sur la figure 2, lesdits deuxièmes moyens 4B comportent d'une base de données 13 embarquée sur l'aéronef et reliée par une liaison 14 à l'unité de calcul 5, dont est issue ladite position du seuil de la piste d'atterrissage.

Dans un troisième mode de réalisation représenté sur la figure 3, lesdits deuxièmes moyens 4C comportent d'une base de données 15 embarquée sur l'aéronef et reliée par une liaison 16 à l'unité de calcul 5, dont est issue ladite position du seuil de la piste d'atterrissage.

De préférence, ladite base de données 13, 15 fait partie d'un système de gestion de vol de type FMS ("Flight Management System" en anglais).

Par ailleurs, dans un mode de réalisation particulier, le dispositif 1 conforme à l'invention comporte un récepteur multimode 17 d'aide à l'atterrissage, de type MMR ("Multi Mode Receiver"), qui comprend au moins :

- ledit moyen radioélectrique 2A, 2B d'aide à l'atterrissage ;
- lesdits premiers moyens 3 ; et
- ladite unité de calcul 5.

Ainsi, grâce au dispositif 1 conforme à l'invention, on obtient les avantages suivants :

- une seule antenne permet de répondre à toutes les contraintes précitées, si son installation permet de garantir, tout au long de l'atterrissage, une réception correcte et suffisante du signal radioélectrique d'aide au guidage ;

- sur des avions très gros porteurs, le dispositif 1 permet de satisfaire facilement à la "règle des 19 pieds" ;

- ledit dispositif 1 peut être adapté automatiquement à tous les aéronefs, sans modification ou avec des modifications mineures du moyen radioélectrique 2A, 2B d'aide à l'atterrissage ;

- ledit dispositif 1 supprime les problèmes d'installation des antennes, en partie inférieure de l'aéronef ; et
- il n'est plus nécessaire de développer et de mettre au point des algorithmes de commutation entre les différentes antennes.

## Revendications

1.  Procédé d'aide à l'atterrissage d'un aéronef sur une piste d'atterrissage, ledit procédé employant au moins un moyen radioélectrique d'aide à l'atterrissage et utilisant une position verticale angulaire de l'aéronef, procédé selon lequel :

    a) on détermine de façon autonome la position de l'aéronef en latitude et longitude ; et
    b) on fournit la position du seuil de ladite piste d'atterrissage en latitude et longitude, **caractérisé en ce que** de plus :
    c) à partir des positions de l'aéronef et du seuil de la piste d'atterrissage, on calcule une première distance correspondant à la distance dans un plan horizontal entre l'aéronef et le seuil de la piste d'atterrissage ;
    d) on ajoute à cette première distance la distance dans un plan horizontal entre un point de référence au sol prédéterminé et ledit seuil de la piste d'atterrissage de manière à former une seconde distance ;
    e) à l'aide de cette seconde distance et de la valeur de la pente d'approche mesurée de l'aéronef, on calcule une première hauteur correspondant à la hauteur relative de l'aéronef par rapport au seuil de la piste d'atterrissage ;
    f) on soustrait à ladite première hauteur un écart métrique prédéterminé de manière à former une seconde hauteur ; et
    g) à partir de ladite seconde hauteur et de ladite seconde distance, on corrige ladite position verticale angulaire de l'aéronef, la position verticale angulaire ainsi corrigée étant utilisée pour aider à l'atterrissage de l'aéronef,
    lesdites étapes a) à g) étant réalisées de façon automatique et répétitive.

2.  Procédé selon la revendication 1, **caractérisé en ce que** ledit écart métrique prédéterminé utilisé à l'étape f) permet de respecter une règle des 19 pieds.

3.  Procédé selon l'une des revendications 1 et 2, **caractérisé en ce qu'**à l'étape a), on détermine la position de l'aéronef à l'aide d'un récepteur GPS (3) embarqué sur ledit aéronef.

4.  Procédé selon l'une quelconque des revendications précédentes,
**caractérisé en ce que** ledit point de référence au sol utilisé à l'étape d) correspond au point d'origine, sur la piste, de la pente d'approche.

5.  Procédé selon l'une quelconque des revendications précédentes, **caractérisé en ce qu'**à l'étape e), on calcule ladite première hauteur H1 à l'aide de l'expression suivante :

$$H1 = D1.\tan\alpha$$

    dans laquelle :

    - $\alpha$ est la valeur de la pente d'approche mesurée par le récepteur du système d'atterrissage ;
    - $\tan\alpha$ est la tangente de $\alpha$ ; et
    - D1 représente ladite seconde distance.

6.  Procédé selon la revendication 5, **caractérisé en ce qu'**à l'étape g), on calcule ladite position angulaire corrigée $\alpha1$ à l'aide de l'expression suivante :

$$\alpha1 = \arctan\left[(H1 - H2)/D1\right]$$

    dans laquelle H2 représente ledit écart métrique prédéterminé.

7.  Procédé selon l'une quelconque des revendications 1 à 6, **caractérisé en ce que** ledit moyen radioélectrique (2A) d'aide à l'atterrissage comprend un récepteur (8) d'un système d'atterrissage hyperfréquences et **en ce que** ledit récepteur (8) reçoit la position du seuil de la piste d'atterrissage à partir d'une station au sol.

8.  Procédé selon l'une quelconque des revendications 1 à 6, **caractérisé en ce que** ledit moyen radioélectrique (2A) d'aide à l'atterrissage comprend un récepteur (8) d'un système d'atterrissage hyperfréquences et **en ce que** ladite position du seuil de la piste d'atterrissage est issue d'une base de données (13) embarquée sur l'aéronef.

9.  Procédé selon l'une quelconque des revendications 1 à 6, **caractérisé en ce que** ledit moyen radioélectrique (2B) d'aide à l'atterrissage comprend un récepteur (11) d'un système d'atterrissage aux instruments et **en ce que** ladite position du seuil de la piste d'atterrissage est issue d'une base de données (15) embarquée sur l'aéronef.

10. Dispositif d'aide à l'atterrissage d'un aéronef sur une piste d'atterrissage, ledit dispositif (1) utilisant une position verticale angulaire de l'aéronef et comportant :

- au moins un moyen radioélectrique (2A, 28) d'aide à l'atterrissage ;
- des premiers moyens (3) pour déterminer de façon autonome la position de l'aéronef en latitude et longitude ;
- des deuxièmes moyens (4A, 4B, 4C) pour fournir la position du seuil de ladite piste d'atterrissage en latitude et longitude ; et
- une unité de calcul (5) qui utilise lesdites positions de l'aéronef et du seuil de la piste d'atterrissage, **caractérisé en ce que** lesdits premiers moyens (3), lesdits deuxièmes moyens (4A, 4B et 4C) et ladite unité de calcul (5) sont formés de manière à réaliser leurs traitements de façon automatique et répétitive, et **en ce que** ladite unité de calcul (5) comprend des moyens :
- pour calculer, à partir des positions de l'aéronef et du seuil de la piste d'atterrissage, une première distance correspondant à la distance dans un plan horizontal entre l'aéronef et le seuil de la piste d'atterrissage ;
- pour ajouter à cette première distance la distance dans un plan horizontal entre un point de référence au sol prédéterminé et ledit seuil de la piste d'atterrissage de manière à former une seconde distance ;
- pour calculer, à l'aide de cette seconde distance et de la valeur de la pente d'approche mesurée de l'aéronef, une première hauteur correspondant à la hauteur relative de l'aéronef par rapport au seuil de la piste d'atterrissage ;
- pour soustraire à ladite première hauteur un écart métrique prédéterminé de manière à former une seconde hauteur ; et
- pour corriger, à partir de ladite seconde hauteur et de ladite seconde distance, ladite position verticale angulaire de l'aéronef, la position verticale angulaire ainsi corrigée étant utilisée pour aider à l'atterrissage de l'aéronef.

11. Dispositif selon la revendication 10,
**caractérisé en ce que** lesdits premiers moyens (3) comportent un récepteur GPS embarqué sur l'aéronef.

12. Dispositif selon l'une des revendications 10 et 11,
**caractérisé en ce que** lesdits deuxièmes moyens (2A) comportent un récepteur (8) embarqué sur l'aéronef et coopérant avec une station au sol.

13. Dispositif selon l'une des revendications 10 et 11,
**caractérisé en ce que** lesdits deuxièmes moyens (2B) comportent une base de données (13, 15).

14. Dispositif selon l'une quelconque des revendications 10 à 13,
**caractérisé en ce que** ledit moyen radioélectrique (2A) d'aide à l'atterrissage comprend un récepteur (8) d'un système d'atterrissage hyperfréquences.

15. Dispositif selon l'une quelconque des revendications 10 à 13,
**caractérisé en ce que** ledit moyen radioélectrique (2B) d'aide à l'atterrissage comprend un récepteur (11) d'un système d'atterrissage aux instruments.

16. Dispositif selon l'une quelconque des revendications 10 à 15,
**caractérisé en ce qu'**il comporte un récepteur multimode (17) d'aide à l'atterrissage qui comprend au moins :

- ledit moyen radioélectrique (2A, 2B) d'aide à l'atterrissage ;
- lesdits premiers moyens (3) ; et
- ladite unité de calcul (5).

**Claims**

1. A method of aiding the landing of an aircraft on a runway, said method employing at least one landing aid radio means and using an angular vertical position of the aircraft, method according to which:

a) the position of the aircraft in latitude and longitude is determined in a stand-alone manner; and

b) the position of the threshold of said runway in latitude and longitude is provided,
**characterized in that**, further:
c) on the basis of the positions of the aircraft and of the threshold of the runway, a first distance corresponding to the distance in a horizontal plane between the aircraft and the threshold of the runway is computed;
d) to this first distance is added the distance in a horizontal plane between a predetermined ground reference point and said threshold of the runway so as to form a second distance;
e) with the aid of this second distance and of the value of the measured approach slope of the aircraft, a first height corresponding to the relative height of the aircraft with respect to the threshold of the runway is computed;
f) a predetermined metric deviation is subtracted from said first height so as to form a second height; and
g) on the basis of said second height and of said second distance, said angular vertical position of the aircraft is corrected, the angular vertical position thus corrected being used to aid the landing of the aircraft,

said operations a) to g) being carried out automatically and repetitively.

2. The method as claimed in claim 1, **characterized in that** said predetermined metric deviation used in step f) makes it possible to comply with a 19-feet rule.

3. The method as claimed in one of claims 1 and 2, **characterized in that** in step a), the position of the aircraft is determined with the aid of a GPS receiver (3) aboard said aircraft.

4. The method as claimed in any one of the preceding claims, **characterized in that** said ground reference point used in step d) corresponds to the origin point, on the runway, of the approach slope.

5. The method as claimed in any one of the preceding claims, **characterized in that** in step e), said first height H1 is computed with the aid of the following expression:

$$\mathrm{H1 \; = \; D1.tan}\alpha$$

in which:

    - $\alpha$ is the value of the approach slope measured by the receiver of the landing system;
    - $\tan\alpha$ is the tangent of $\alpha$; and
    - D1 represents said second distance.

6. The method as claimed in claim 5, **characterized in that** in step g), said corrected angular position is computed with the aid of the following expression:

$$\alpha\mathrm{1 \; = \; arctan \; [(H1 \; - \; H2)/D1]}$$

in which H1 and D1 represent the magnitudes specified in claim 5 and, H2 represents said predetermined metric deviation.

7. The method as claimed in any one of claims 1 to 6, **characterized in that** said landing aid radio means (2A) comprises a receiver (8) of a microwave landing system and **in that** said receiver (8) receives the position of the threshold of the runway from a ground station.

8. The method as claimed in any one of claims 1 to 6, **characterized in that** said landing aid radio means (2A) comprises a receiver (8) of a microwave landing system and **in that** said position of the threshold of the runway is output by a database (13) aboard the aircraft.

9. The method as claimed in any one of claims 1 to 6, **characterized in that** said landing aid radio means (2B) comprises a receiver (11) of an instrument landing system and **in that** said position of the threshold of the runway is output by a database (15) aboard the aircraft.

10. A device for aiding the landing of an aircraft on a runway, said device (1) using an angular vertical position of the aircraft and comprising:

    - at least one landing aid radio means (2A, 2B);
    - first means (3) for determining in a stand-alone manner the position of the aircraft in latitude and longitude;
    - second means (4A, 4B, 4C) for providing the position of the threshold of said runway in latitude and longitude; and
    - a computing unit (5) which uses said positions of the aircraft and of the threshold of the runway, **characterized in that** said first means (3), said second means (4A, 4B, 4C, 4D) and said computing unit (5) are formed in order to carry out their operations, automatically and repetitively, and **in that** said computing unit (5) comprises means:
    - for determining , on the basis of the positions of the aircraft and of the threshold of the runway, a first distance corresponding to the distance in a horizontal plane between the aircraft and the threshold of the runway;
    - for adding to this first distance the distance in a horizontal plane between a predetermined ground reference point and said threshold of the runway so as to form a second distance;
    - for computing, with the aid of this second distance and of the value of the measured approach slope of the aircraft, a first height corresponding to the relative height of the aircraft with respect to the threshold of the runway;
    - for subtracting a predetermined metric deviation from said first height so as to form a second height; and
    - for correcting, on the basis of said second height and of said second distance, said angular vertical position of the aircraft, the angular vertical position thus corrected being used to aid the landing of the aircraft.

11. The device as claimed in claim 10, **characterized in that** said first means (3) comprise a GPS receiver aboard the aircraft.

12. The device as claimed in one of claims 10 and 11,

**characterized in that** said second means (2A) comprise a receiver (8) aboard the aircraft and cooperating with a ground station.

13. The device as claimed in one of claims 10 to 11, **characterized in that** said second means (2B) comprise a database (13, 15).

14. The device as claimed in any one of claims 10 to 13, **characterized in that** said landing aid radio means (2A) comprises a receiver (8) of a microwave landing system.

15. The device as claimed in any one of claims 10 to 13, **characterized in that** said landing aid radio means (2B) comprises a receiver (11) of an instrument landing system.

16. The device as claimed in any one of claims 10 to 15, **characterized in that** it comprises a landing aid multimode receiver (17) which comprises at least:

    - said landing aid radio means (2A, 2B);
    - said first means (3); and
    - said computing unit (5).

**Patentansprüche**

1. Verfahren zur Unterstützung der Landung eines Flugzeugs auf einer Landebahn, wobei das Verfahren mindestens ein radioelektrisches Mittel zur Unterstützung der Landung verwendet und eine vertikale Winkelposition des Flugzeugs verwendet, Verfahren, nach dem:

    a) auf selbständige Weise die Position des Flugzeugs nach Breite und Länge bestimmt wird; und

    b) die Position der Schwelle der Landebahn nach Breite und Länge bereitgestellt wird, **dadurch gekennzeichnet, dass** außerdem:

    c) ausgehend von den Positionen des Flugzeugs und der Schwelle der Landebahn ein erster Abstand, entsprechend dem Abstand in einer horizontalen Ebene zwischen dem Flugzeug und der Schwelle der Landebahn berechnet wird;

    d) diesem ersten Abstand der Abstand in einer horizontalen Ebene zwischen einem vorbestimmten Referenzpunkt am Boden und der Schwelle der Landebahn hinzugefügt wird, um einen zweiten Abstand zu bilden;

    e) mit Hilfe dieses zweiten Abstands und des Werts der gemessenen Anflugsneigung des Flugzeugs eine erste Höhe, entsprechend der relativen Höhe des Flugzeugs bezüglich der Schwelle der Landebahn, berechnet wird;

    f) von der ersten Höhe eine vorbestimmte metrische Abweichung abgezogen wird, um eine zweite Höhe zu bilden; und

    g) ausgehend von der zweiten Höhe und dem zweiten Abstand die vertikale Winkelposition des Flugzeugs korrigiert wird, wobei die so korrigierte vertikale Winkelposition verwendet wird, um die Landung des Flugzeugs zu unterstützen, wobei die Schritte a) bis g) automatisch und wiederholt durchgeführt werden.

2. Verfahren nach Anspruch 1, **dadurch gekennzeichnet, dass** die vorbestimmte metrische Abweichung, die in Schritt f) verwendet wird, ermöglicht, eine vorschriftsmäßige Entfernung von 19 Fuß einzuhalten.

3. Verfahren nach einem der Ansprüche 1 und 2, **dadurch gekennzeichnet, dass** in Schritt a) die Position des Flugzeugs mit Hilfe eines GPS-Empfängers (3), der sich an Bord des Flugzeugs befindet, bestimmt wird.

4. Verfahren nach einem der vorhergehenden Ansprüche, **dadurch gekennzeichnet, dass** der Referenzpunkt am Boden, der in Schritt d) verwendet wird, dem Ausgangspunkt der Anflugsneigung auf der Landebahn entspricht.

5. Verfahren nach einem der vorhergehenden Ansprüche, **dadurch gekennzeichnet, dass** in Schritt e) die erste Höhe H1 mit Hilfe des folgenden Ausdrucks berechnet wird:

$$H1 = D1.\tan\alpha$$

worin:

    - $\alpha$ der Wert der Anflugsneigung, gemessen vom Empfänger des Landesystems, ist;
    - $\tan\alpha$ die Tangente von $\alpha$ ist; und
    - D1 den zweiten Abstand darstellt.

6. Verfahren nach Anspruch 5, **dadurch gekennzeichnet, dass** in Schritt g) die erst korrigierte Winkelposition $\alpha1$ mit Hilfe des folgenden Ausdrucks berechnet wird:

$$\alpha1 = \arctan [(H1 - H2)/D1]$$

wobei H2 die vorbestimmte metrische Abweichung darstellt.

**7.** Verfahren nach einem der Ansprüche 1 bis 6, **dadurch gekennzeichnet, dass** das radioelektrische Mittel (2A) zur Unterstützung der Landung einen Empfänger (8) eines Hochfrequenz-Landesystems umfasst, und dadurch**,** dass der Empfänger (8) die Position der Schwelle der Landebahn ausgehend von einer Bodenstation erhält.

**8.** Verfahren nach einem der Ansprüche 1 bis 6, **dadurch gekennzeichnet, dass** das radioelektrische Mittel (2A) zur Unterstützung der Landung einen Empfänger (8) eines Hochfrequenz-Landesystems umfasst, und dadurch**,** dass die Position der Schwelle der Landebahn aus einer Datenbank (13) stammt, die sich an Bord des Fugzeugs befindet.

**9.** Verfahren nach einem der Ansprüche 1 bis 6, **dadurch gekennzeichnet, dass** das radioelektrische Mittel (2B) zur Unterstützung der Landung einen Empfänger (11) eines Landesystems mit Instrumenten umfasst, und dadurch, dass die Position der Schwelle der Landebahn aus einer Datenbank (15) stammt, die sich an Bord des Fugzeugs befindet.

**10.** Vorrichtung zur Unterstützung der Landung eines Flugzeugs auf einer Landebahn, wobei die Vorrichtung (1) mindestens eine vertikale Winkelposition des Flugzeugs verwendet und Folgendes umfasst:

- mindestens ein radioelektrisches Mittel (2A, 2B) zur Unterstützung der Landung;
- erste Mittel (3), um auf selbständige Weise die Position des Flugzeugs nach Breite und Länge zu bestimmen;
- zweite Mittel (4A, 4B, 4C), um die Position der Schwelle der Landebahn nach Breite und Länge bereitzustellen; und
- eine Berechnungseinheit (5), die die Positionen des Flugzeugs und der Schwelle der Landebahn verwendet,

**dadurch gekennzeichnet, dass** die ersten Mittel (3), die zweiten Mittel (4A, 4B und 4C) und die Berechnungseinheit (5) so gebildet sind, dass sie ihre Verarbeitungen automatisch und wiederholt durchzuführen, und dadurch, dass die Berechnungseinheit (5) Mittel umfasst:
- um ausgehend von den Positionen des Flugzeugs und der Schwelle der Landebahn einen ersten Abstand, entsprechend dem Abstand in einer horizontalen Ebene zwischen dem Flugzeug und der Schwelle der Landebahn, zu berechnen;
- um diesem ersten Abstand den Abstand in einer horizontalen Ebene zwischen einem vorbestimmten Referenzpunkt am Boden und der Schwelle der Landebahn hinzuzufügen, um einen zweiten Abstand zu bilden;
- um mit Hilfe dieses zweiten Abstands und des Werts der gemessenen Anflugsneigung des Flugzeugs eine erste Höhe, entsprechend der relativen Höhe des Flugzeugs bezüglich der Schwelle der Landebahn, zu berechnen;
- um von der ersten Höhe eine vorbestimmte metrische Abweichung abzuziehen, um eine zweite Höhe zu bilden; und
- um, ausgehend von der zweiten Höhe und dem zweiten Abstand die vertikale Winkelposition des Flugzeugs zu korrigieren, wobei die so korrigiere vertikale Winkelposition verwendet wird, um die Landung des Flugzeugs zu unterstützen.

**11.** Vorrichtung nach Anspruch 10, **dadurch gekennzeichnet, dass** die ersten Mittel (3) einen GPS-Empfänger umfassen, der sich an Bord des Flugzeugs befindet.

**12.** Vorrichtung nach einem der Ansprüche 10 und 11, **dadurch gekennzeichnet, dass** die zweiten Mittel (2A) einen Empfänger (8) umfassen, der sich an Bord des Flugzeugs befindet und mit einer Bodenstation zusammenarbeitet.

**13.** Vorrichtung nach einem der Ansprüche 10 und 11, **dadurch gekennzeichnet, dass** die zweiten Mittel (2B) eine Datenbank (13, 15) umfassen.

**14.** Vorrichtung nach einem der Ansprüche 10 bis 13, **dadurch gekennzeichnet, dass** das radioelektrische Mittel (2A) zur Unterstützung der Landung einen Empfänger (8) eines Hochfrequenz-Landesystems umfasst.

**15.** Vorrichtung nach einem der Ansprüche 10 bis 13, **dadurch gekennzeichnet, dass** das radioelektrische Mittel (2B) zur Unterstützung der Landung einen Empfänger (11) eines Landesystems mit Instrumenten umfasst.

**16.** Vorrichtung nach einem der Ansprüche 10 bis 15, **dadurch gekennzeichnet, dass** sie einen Multimodus-Empfänger(17) zur Unterstützung der Landung umfasst, umfassend mindestens:

- das radioelektrische Mittel (2A, 2B) zur Unterstützung der Landung;
- die ersten Mittel (3); und
- die Berechnungseinheit (5).

EP 1 589 351 B1

Fig. 1

11

Fig. 2

Fig. 3

**EP 1 589 351 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5361212 A
- US 5820080 A
- US 3662392 A
- US 6239745 B
- US 6711479 B